(19) Europäisches Patentamt

European Patent Office

Office européen des brevets

(11) **EP 1 198 921 B1**

(12) **FASCICULE DE BREVET EUROPEEN**

(45) Date de publication et mention
de la délivrance du brevet:
**05.04.2006 Bulletin 2006/14**

(51) Int Cl.:
***H04L 9/06*** (2006.01)

(21) Numéro de dépôt: **00900632.1**

(86) Numéro de dépôt international:
**PCT/FR2000/000130**

(22) Date de dépôt: **20.01.2000**

(87) Numéro de publication internationale:
**WO 2000/049765 (24.08.2000 Gazette 2000/34)**

(54) **PROCEDE DE CONTRE-MESURE DANS UN COMPOSANT ELECTRONIQUE METTANT EN OEUVRE UN ALGORITHME DE CRYPTOGRAPHIE A CLE SECRETE**

GEGENMASSNAHMENVERFAHREN IN EINEM ELEKTRONISCHEN BAUELEMENT MIT EINEM KRYPTOSYSTEM MIT PRIVATEM SCHLÜSSEL

METHOD FOR COUNTERMEASURE IN AN ELECTRONIC COMPONENT USING A SECRET KEY ALGORITHM

(84) Etats contractants désignés:
**DE ES FR GB IT**

(30) Priorité: **17.02.1999 FR 9901937**

(43) Date de publication de la demande:
**24.04.2002 Bulletin 2002/17**

(73) Titulaire: **GEMPLUS**
**13881 Gémenos Cedex (FR)**

(72) Inventeurs:
- **CORON, Jean-Sébastien**
  **F-75005 Paris (FR)**
- **FEYT, Nathalie**
  **13005 Marseille (FR)**
- **BENOIT, Olivier**
  **F-13400 Aubagne (FR)**

(56) Documents cités:
**FR-A- 2 672 402**

- **MIYAGUCHI S: "SECRET KEY CIPHERS THAT CHANGE THE ENCIPHERMENT ALGORITHM UNDER THECONTROL OF THE KEY" NTT REVIEW, vol. 6, no. 4, 1 juillet 1994 (1994-07-01), pages 85-90, XP000460342**
- **YI X ET AL: "A METHOD FOR OBTAINING CRYPTOGRAPHICALLY STRONG 8X8 S-BOXES" IEEE GLOBAL TELECOMMUNICATIONS CONFERENCE, PHOENIX, ARIZONA, NOV. 3 - 8, 1997, vol. 2, 3 novembre 1997 (1997-11-03), pages 689-693, XP000737626 INSTITUTE OF ELECTRICAL AND ELECTRONICS ENGINEERS**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un procédé de contre-mesure dans un composant électronique mettant en oeuvre un algorithme de cryptographie à clé secrète. Ils sont utilisés dans des applications où l'accès à des services ou à des données est sévèrement contrôlé. De tels composants ont une architecture formée autour d'un microprocesseur et de mémoires, dont une mémoire programme qui contient la clé secrète.

Ces composants sont notamment utilisés dans les cartes à puce, pour certaines applications de celles-ci. Ce sont par exemple des applications d'accès à certaines banques de données, des applications bancaires, des applications de télé-péage, par exemple pour la télévision, la distribution d'essence ou encore le passage de péages d'autoroutes.

Ces composants ou ces cartes mettent donc en oeuvre un algorithme de cryptographie à clé secrète, dont le plus connu est l'algorithme DES (pour *Data Encryption Standard* dans la littérature anglo-saxonne). D'autres algorithmes à clé secrète existent, comme l'algorithme RC5 ou encore l'algorithme COMP128. Cette liste n'est bien sûr pas exhaustive.

De manière générale et succincte, ces algorithmes ont pour fonction de calculer un message chiffré à partir d'un message appliqué en entrée (à la carte) par un système hôte (serveur, distributeur bancaire...) et de la clé secrète contenue dans la carte, et de fournir en retour au système hôte ce message chiffré, ce qui permet par exemple au système hôte d'authentifier le composant ou la carte, d'échanger des données...

Les caractéristiques des algorithmes de cryptographie à clé secrète sont connues calculs effectués, paramètres utilisés. La seule inconnue est la clé secrète contenue en mémoire programme. Toute la sécurité de ces algorithmes de cryptographie tient dans cette clé secrète contenue dans la carte et inconnue du monde extérieur à cette carte. Cette clé secrète ne peut être déduite de la seule connaissance du message appliqué en entrée et du message chiffré fourni en retour.

Or il est apparu que des attaques externes, basées sur les consommations de courant ou une analyse différentielle de consommation en courant lorsque le microprocesseur d'une carte est en train de dérouler l'algorithme de cryptographie pour calculer un message chiffré, permettent à des tiers mal intentionnés de trouver la clé secrète contenue dans cette carte. Ces attaques sont appelées attaques DPA, acronyme anglo-saxon pour *Differential Power Analysis*.

Le principe de ces attaques DPA repose sur le fait que la consommation en courant du microprocesseur exécutant des instructions varie selon la donnée manipulée.

Notamment, quand une instruction exécutée par le microprocesseur nécessite une manipulation d'une donnée bit par bit, on a deux profils de courant différents selon que ce bit vaut "1" ou "0". Typiquement, si le microprocesseur manipule un "0", on a à cet instant d'exécution une première amplitude du courant consommé et si le microprocesseur manipule un "1", on a une deuxième amplitude du courant consommé, différente de la première.

Ainsi l'attaque DPA exploite la différence du profil de consommation en courant dans la carte pendant l'exécution d'une instruction suivant la valeur du bit manipulé. D'une manière simplifiée, la conduite d'une attaque DPA consiste à identifier une ou des périodes particulières du déroulement de l'algorithme comprenant l'exécution d'au moins une instruction manipulant des données bit par bit; à relever un très grand nombre N de courbes de consommation en courant pendant cette ou ces périodes, une courbe par message différent sur lequel on applique l'algorithme; à prédire, pour chaque courbe, la valeur prise par un bit de la donnée pour une hypothèse sur une, sous-clé, c'est à dire sur une partie au moins de la clé secrète, qui permet de faire la prédiction ; et à effectuer un tri des courbes selon la fonction de sélection booléenne correspondante : on obtient un premier paquet de courbes pour lesquelles la prédiction vaut "1" et un deuxième paquet de courbes pour lesquelles la prédiction vaut "0". En effectuant une analyse différentielle de la consommation moyenne en courant entre les deux paquets de courbes obtenus, on obtient un signal d'information DPA (t). Si l'hypothèse de sous-clé n'est pas juste, chaque paquet comprend en réalité autant de courbes correspondant à la manipulation d'un "1" que de courbes manipulant un "0". Les deux paquets sont donc équivalents en terme de consommation en courant et le signal d'information est sensiblement nul. Si l'hypothèse de sous-clé est juste, un paquet comprend réellement les courbes correspondant à la manipulation d'un "0" et l'autre paquet comprend réellement les courbes correspondant à la manipulation d'un "0" : le signal d'information DPA(t) obtenu n'est pas nul : il comprend des pics de consommation correspondant à la manipulation par le microprocesseur du bit sur lequel on a basé le tri. Ces pics ont une amplitude correspondant à la différence de consommation par le microprocesseur selon qu'il manipule un "1" ou un "0". Ainsi, de proche en proche, il est possible de découvrir tout ou partie de la clé secrète contenue dans un composant électronique.

Il existe de nombreux algorithmes à clé secrète pour l'exécution desquels le microprocesseur doit effectuer à certains moments des manipulations de données bit par bit.

Notamment, les algorithmes comprennent généralement des permutations qui nécessitent de telles manipulations par le microprocesseur. En analysant la consommation de courant lors de l'exécution de ces manipulations bit par bit, il est possible de retrouver la valeur de certains bits au moins- de la donnée manipulée. La connaissance de cette donnée peut fournir des informations sur des résultats intermédiaires obtenus lors de l'exécution de l'algorithme de chiffrement, qui à leur tour peuvent permettre de retrouver une partie au moins des bits de la clé secrète utilisée.

Trois documents s'approchant de l'invention tout en s'en démarquant sont cités ci-dessous.

Le premier document « NTT REVIEW, Vol.6, no.4, du 1 juillet 1997, pages 85-90, MIYAGUCHI S : « SECRET KEY CIPHERS THAT CHANGE THE ENCIPHERMENT ALGORITHM UNDER THE CONTROL OF THE KEY », XP000460342 », noté D1, concerne une résolution à un problème mathématique qui évite les attaques à message et chiffrées connues. La méthode décrite modifie le « key schedule », traduit par « sous-partie de la clé dans l'algorithme », de n'importe quel algorithme a clé secrète. Cependant, cette méthode ne s'adresse plus à l'algorithme standard DES, algorithme à clé secrète bien connue. La technologie décrite dans ce document consiste à effectuer des rotations de données et aussi de substitution de données.

Le second document « INSTITUTE OF ELECTRICAL AND ELECTRONICS ENGINEERS, IEEE GLOBAL TELECOMMUNICATIONS CONFERENCE, PHOENIX, ARIZONA, NOV.3-8, 1997, vol.2,3 novembre 1997, pages 689-693, YI X ET AL : "A METHOD FOR OBTAINING CRYPTOGRAPHICALLY STRONG 8X8 S-BOXES", XP000737626 », noté D2, concerne une proposition d'amélioration des S BOX dans l'algorithme DES standard destinée à améliorer la sécurisation sur un plan cryptanalyse, c'est à dire en mathématique, mais pas en cryptographie physique.

Le troisième document « FR-A-2 672 402 », noté D3, concerne un procédé et dispositif utilisant l'algorithme standard DES pour construire un générateur de nombres aléatoires. L'algorithme DES est un algorithme à clé secrète avec des données comme par exemple un compteur destiné à générer en sortie un résultat qui peut être assimilé à un nombre aléatoire, résultat situé à l'extérieur du DES.

La présente invention a pour objet de protéger les données sur lesquelles on effectue des manipulations bit par bit, en leur appliquant une contre-mesure, c'est à dire un brouillage, en sorte que l'analyse de la consommation de courant lors de la manipulation de cette donnée ne révèle aucune information sur cette donnée : le signal d'information DPA(t) sera toujours nul quelque soit les hypothèses de sous-clé ou de clé effectuées dans les attaques DPA.

Telle que revendiquée, l'invention concerne un procédé de contre-mesure dans un composant électronique mettant en oeuvre un algorithme cryptographique à clé secrète K.

Selon l'invention, le procédé de contre-mesure consiste, pour une opération ou une suite d'opérations appliquée sur une donnée d'entrée et comprenant au moins une manipulation bit par bit, à tirer au préalable une première donnée aléatoire de même taille que la première donnée, à calculer une deuxième donnée aléatoire en effectuant un OU exclusif entre la première donnée aléatoire et la donnée d'entrée, et à appliquer successivement l'opération ou la suite d'opérations à la première donnée aléatoire et à la deuxième donnée aléatoire.

De cette manière, l'opération ou la suite d'opérations ne manipule que des données aléatoires en sorte qu'il n'est plus possible de mettre en oeuvre une attaque DPA.

Pour retrouver la donnée de sortie correspondant à l'application de la suite d'étapes sur la donnée d'entrée, il suffit de calculer le OU exclusif entre le premier et le deuxième résultats aléatoires.

Dans un premier mode d'application de ce procédé de contre-mesure, l'opération ou la suite d'opérations porte sur une donnée calculée à partir du message à chiffrer.

Dans un deuxième mode d'application du procédé de contre-mesure selon l'invention, on applique ce procédé à des opérations portant directement sur la clé secrète et fournissant pour chaque tour de l'algorithme la sous-clé à utiliser.

Dans ce mode d'application du procédé de contre-mesure selon l'invention, on prévoit d'effectuer une première suite d'étapes selon le procédé indiqué plus haut en sorte que l'on obtient une première sous-clé aléatoire et une deuxième sous-clé aléatoire.

Dans cette variante, au lieu de calculer la sous-clé vraie pour le tour considéré, on utilise ces sous-clés aléatoires, en sorte que la sous-clé vraie de chaque tour n'apparaît plus en clair : on ne manipule que des sous-clé aléatoires.

Ainsi, la présente invention se distingue d'abord du document D1 en ce qu'elle concerne uniquement le DES sans modifier sa structure, ni ses entrées, ni ses sorties de données. L'opération XOR utilisée décrite ci-dessous permet de masquer les données avec un paramètre aléatoire.

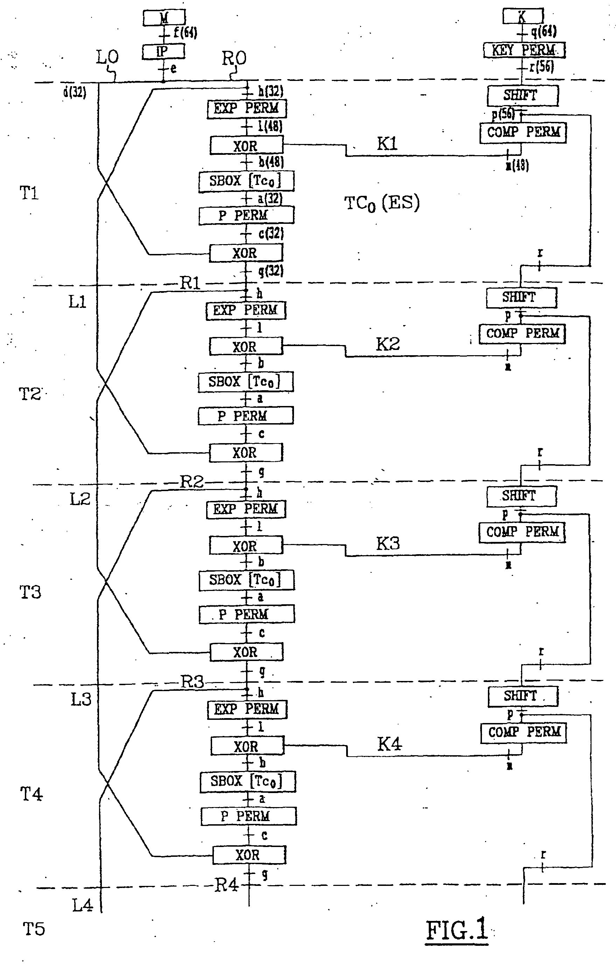

Elle se distingue également du document D2 en ce qu'elle aborde les problèmes de cryptographies physique c'est à dire qu'elle propose de résoudre des problèmes de mise en oeuvre par apparition d'effets secondaires ; par ailleurs elle ne concerne pas les S BOX mais aborde les problèmes de sécurisation lors des compressions, permutations, expansions des données (cf figure 1 ci-dessous décrite.)

Enfin, elle se distingue du document D3 en ce qu'elle utilise un nombre aléatoire à l'intérieur de l'algorithme DES pour sécuriser l'exécution du DES contre tous types d'attaques.

D'autres caractéristiques et avantages de l'invention sont détaillés dans la description suivante faite à titre indicatif et nullement limitatif et en référence aux dessins annexés, dans lesquels :

- les figures 1 et 2 sont des organigrammes détaillés des premiers et derniers tours de l'algorithme DES;
- la figure 3 représente schématiquement le procédé de contre-mesure selon l'invention appliqué à une opération effectuant une manipulation de donnée bit par bit.
- la figure 4 représente un premier mode d'application du procédé de contre-mesure selon l'invention dans l'exécution de l'algorithme DES;

- la figure 5 représente schématiquement la fin d'exécution de l'algorithme DES ;
- la figure 6 représente schématiquement deuxième mode d'application du procédé selon l'invention sur les opérations de l'algorithme DES manipulant la clé secrète; et
- la figure 7 représente un organigramme détaillé de l'algorithme DES dans une application du procédé de contre-mesure correspondant au schéma de la figure 5; et
- la-figure 8 représente un schéma-bloc d'une carte à puce dans laquelle on peut mettre en oeuvre un procédé de contre-mesure selon l'invention.

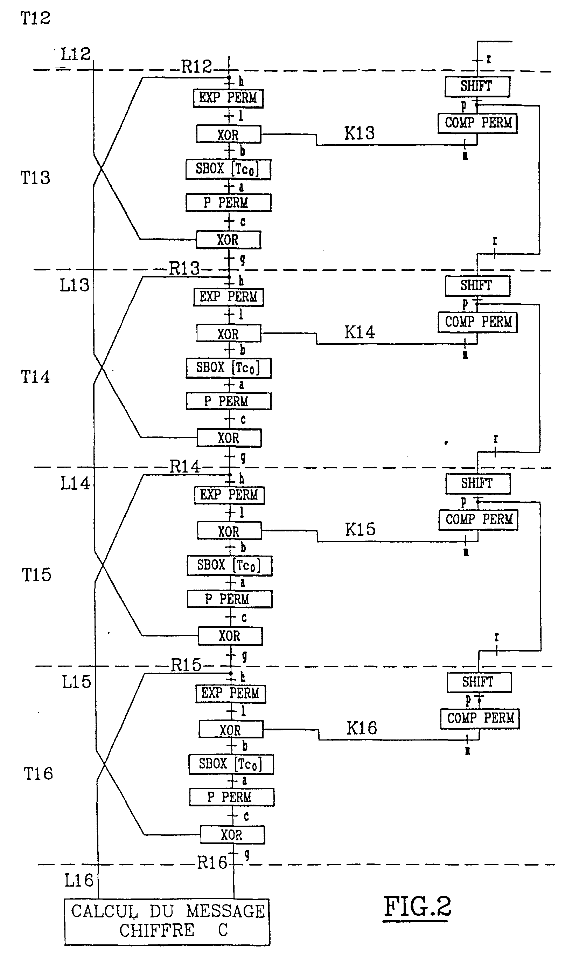

L'algorithme cryptographique à clé secrète DES (dans la suite on parlera plus simplement du DES ou de l'algorithme DES) comporte 16 tours de calcul, notés T1 à T16, comme représenté sur les figures 1 et 2.

Le DES débute par une permutation initiale IP sur le message d'entrée M (figure 1). Le message d'entrée M est un mot f de 64 bits. Après permutation, on obtient un mot e de 64 bits, que l'on coupe en deux pour former les paramètres d'entrée L0 et R0 du premier tour (T1). L0 est un mot d de 32 bits contenant les 32 bits de poids forts du mot e. R0 est un mot h de 32 bits contenant les 32 bits de poids faibles du mot e.

La clé secrète K, qui est un mot q de 64 bits subit elle-même une permutation et une compression pour fournir un mot r de 56 bits.

Le premier tour comprend une opération EXP PERM sur le paramètre RO, consistant en une expansion et une permutation, pour fournir en sortie un mot l de 48 bits.

Ce mot 1 est combiné à un paramètre K1, dans une opération de type OU EXCLUSIF notée XOR, pour fournir un mot b de 48 bits. Le paramètre K1 qui est un mot m de 48 bits est obtenu du mot r par un décalage d'une position (opération notée SHIFT sur les figures 1 et 2) fournissant un mot p de 48 bits; sur lequel on applique une opération comprenant une permutation et une compression (opération notée COMP PERM).

Le mot b est appliqué à une opération notée SBOX, en sortie de laquelle on obtient un mot a de 32 bits. Cette opération particulière consiste à fournir une donnée de sortie a prise dans une table de constantes $TC_0$ en fonction d'une donnée d'entrée b.

Le mot a subit une permutation P PERM, donnant en sortie le mot c de 32 bits.

Ce mot c est combiné au paramètre d'entrée L0 du premier tour T1, dans une opération logique de type OU EXCLUSIF, notée XOR, qui fournit en sortie le mot g de 32 bits.

Le mot h (=R0) du premier tour fournit le paramètre d'entrée L1 du tour suivant (T2) et le mot g du premier tour fournit le paramètre d'entrée R1 du tour suivant. Le mot p du premier tour fournit l'entrée r du tour suivant.

Les autres tours T2 à T16 se déroulent de façon similaire, excepté en ce qui concerne l'opération de décalage SHIFT qui se fait sur une ou deux positions selon les tours considérés.

Chaque tour Ti reçoit ainsi en entrée les paramètres Li-1, Ri-1 et r et fournit en sortie les paramètres Li et Ri et r pour le tour suivant Ti+1.

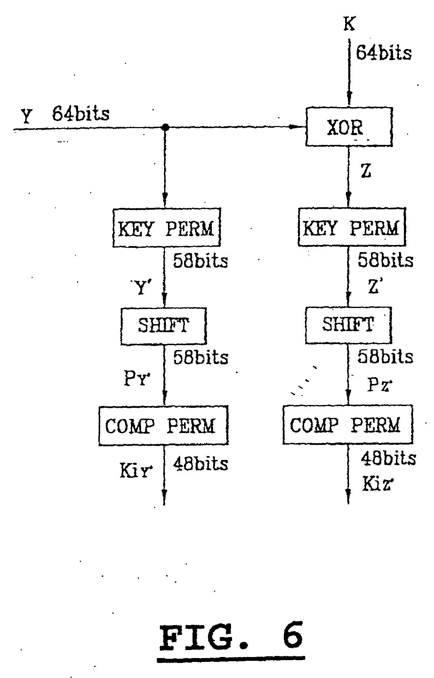

En fin d'algorithme DES (figure 5), le message chiffré est calculé à partir des paramètres L16 et R16 fournis par le dernier tour T16.

Ce calcul du message chiffré C comprend en pratique les opérations suivantes :

- formation d'un mot e' de 64 bits en inversant la position des mots L16 et R16, puis en les concaténant;
- application de la permutation $IP^{-1}$ inverse de celle de début de DES, pour obtenir le mot f' de 64 bits formant le message chiffré C.

On voit que cet algorithme comprend de nombreuses opérations manipulant les données bit par bit, comme les opération de permutation.

Selon le procédé de contre-mesure selon l'invention, on applique une contre-mesure logicielle lorsque le microprocesseur qui calcule le message chiffré effectue une manipulation bit par bit. De cette manière, le traitement statistique et la fonction de sélection booléenne de l'attaque DPA appliqué aux courbes de consommation de courant ne fournit plus aucune information : le signal DPA(t) reste nul quelle que soit les hypothèses de sous-clé effectuées.

La contre-mesure logicielle selon l'invention consiste ainsi à rendre imprédictible chacun des bits manipulés par le microprocesseur.

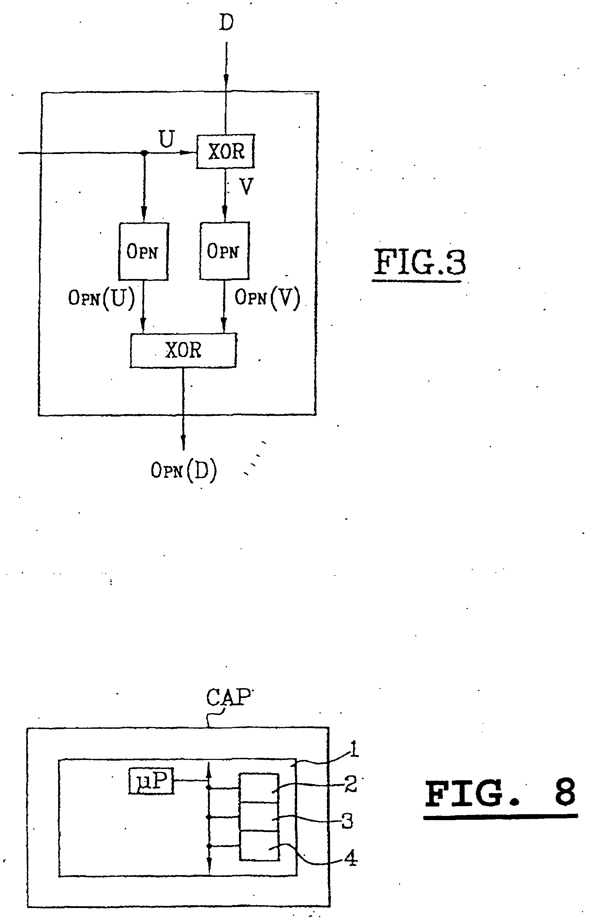

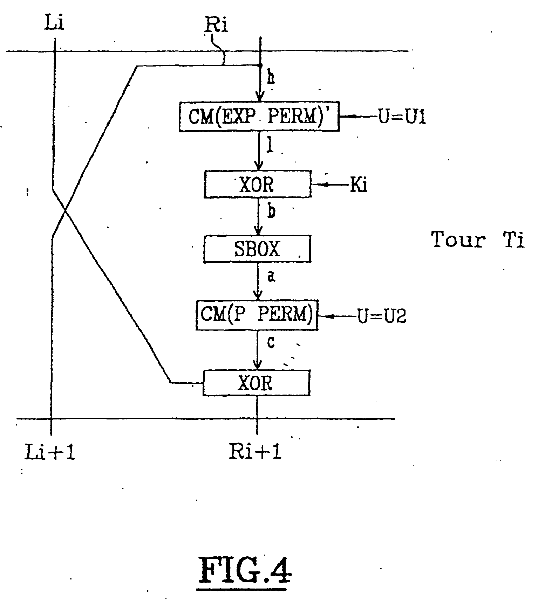

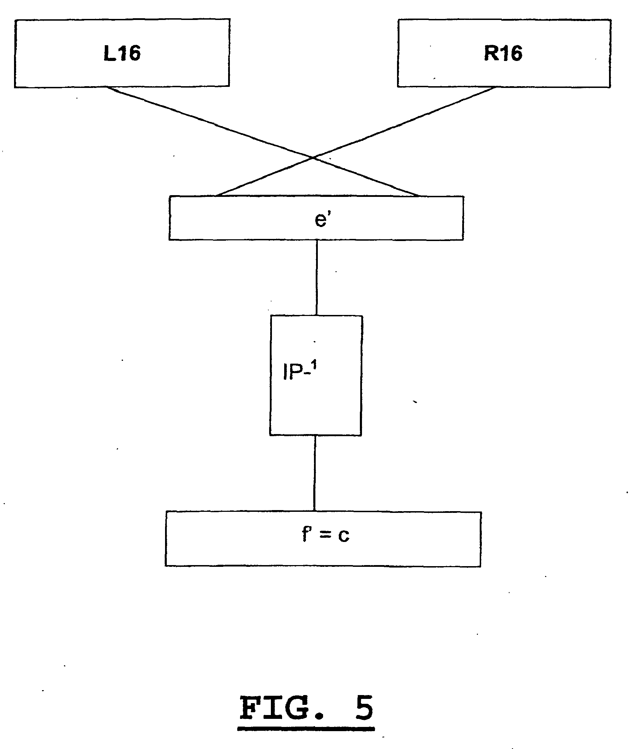

Le principe de cette contre-mesure est représenté sur la figure 3.

Soit une donnée d'entrée D.

Soit une opération $O_{PN}$ à calculer sur cette donnée d'entrée D, dont le résultat est noté $O_{PN}(D)$. Cette opération OPN nécessite une manipulation bit par bit de la donnée d'entrée D par le microprocesseur; il s'agit par exemple d'une permutation.

Selon l'invention, au lieu d'appliquer l'opération OPN sur la donnée d'entrée D pour calculer le résultat $O_{PN}(D)$ de l'opération, on effectue les différentes étapes suivantes :

- tirage d'une valeur aléatoire pour une première donnée aléatoire U, de même taille que la donnée d'entrée D (par exemple, 32 bits) ;
- calcul d'une deuxième donnée aléatoire V en effectuant un OU exclusif entre la donnée d'entrée et la première donnée aléatoire : V = D XOR U;
- calcul de l'opération OPN sur la première donnée aléatoire U, donnant un premier résultat aléatoire $O_{PN}(U)$ ;
- calcul de l'opération OPN sur la deuxième donnée aléatoire V, donnant un deuxième résultat aléatoire OPN(V) ;
- calcul du résultat $O_{PN}(D)$ en effectuant un OU exclusif entre le premier et le deuxième résultats aléatoires : $O_{PN}(D) = O_{PN}(U)\ XOR\ O_{PN}(V)$.

On peut aussi bien appliquer ce procédé à une seule opération qu'à une suite d'opérations.

Un premier mode d'application du procédé de contre-mesure selon l'invention concerne des opérations sur des données calculées à partir du message (M) sur lequel on applique l'algorithme. La donnée d'entrée D est dans ce cas une donnée calculée à partir du message M.

Dans un exemple pratique de ce premier mode d'application à l'algorithme. DES représenté sur la figure 4, on applique ce procédé d'une part à l'opération EXP PERM et d'autre part à l'opération P PERM, qui comprennent toutes deux une permutation nécessitant une manipulation bit par bit de la donnée d'entrée.

Sur la figure on note CM(EXP PERM) et CM(P PERM) l'application de cette contre-mesure sur ces opérations.

La contre-mesure logicielle selon l'invention consiste alors à effectuer à la place de chaque opération P PERM et EXP PERM les opérations CM(EXP PERM) et CM(P PERM) selon la séquence de calcul décrite à la figure 3, en utilisant une variable aléatoire U. Comme chaque tour de l'algorithme comprend une opération EXP PERM et une opération P PERM, on peut appliquer cette contre-mesure dans chacun des tours du DES.

L'expérience montre que ce sont les trois premiers tours et les trois derniers tours qui permettent les attaques DPA. Après, il devient très difficile voire impossible de prédire les bits.

Aussi, une mise en oeuvre moins coûteuse en temps de calcul d'un procédé de contre-mesure selon l'invention consiste à ne l'appliquer qu'à ces trois premiers et trois derniers tours du DES.

Différentes variantes d'application du procédé de contre-mesure selon l'invention concerne le tirage d'une valeur aléatoire pour la première donnée aléatoire U. Selon que l'on dispose de beaucoup de temps de calcul ou pas, on peut tirer une nouvelle valeur aléatoire à chaque fois, pour chacune des opérations ou suite d'opérations pour lesquelles le procédé de contre-mesure selon l'invention est mis en oeuvre.

Sur la figure 4, c'est ainsi que, pour l'opération CM(EXP PERM), on tire une valeur u1 pour la donnée aléatoire U, et, pour l'opération. CM(P PERM), on tire une autre valeur u2 pour la donnée aléatoire U.

Ou bien, on peut tirer une nouvelle valeur aléatoire pour chaque tour de l'algorithme, ou encore une seule valeur aléatoire en début d'algorithme.

La mise en oeuvre du procédé de contre-mesure selon l'invention dépend principalement des applications concernées, selon que l'on peut consacrer beaucoup de temps supplémentaire à la contre-mesure ou pas.

Un deuxième mode d'application du procédé de contre-mesure selon l'invention est représenté sur la figure 6. Il concerne plus particulièrement les opérations de calcul appliquées à la clé secrète K pour fournir chacune des sous-clés Ki utilisées dans les tours de l'algorithme. Dans l'exemple du DES, ces opérations sont les suivantes KEY PERM, exécutée en début de DES et SHIFT et COMP PERM exécutées à chaque tour. Lors de ces opérations, à certains moments, le microprocesseur manipule séparément un bit de la clé secrète, laissant donc la possibilité d'une attaque DPA sur ce bit.

On applique alors le procédé de contre-mesure selon l'invention en protégeant la donnée, la clé secrète en l'occurrence, avant d'effectuer ces opérations, en sorte qu'il n'est plus possible d'obtenir une information par attaque DPA.

Ainsi, et comme schématiquement représenté sur la figure 5, on tire une valeur aléatoire d'une première donnée aléatoire Y, de même taille que la clé secrète K. On calcule une deuxième donnée aléatoire Z de même taille, en faisant un OU exclusif entre la clé secrète K et la première donnée aléatoire Y : Z = K XOR Y.

Dans l'exemple, la séquence d'opérations comprend les opérations suivantes KEY PERM, SHIFT, COMP PERM. On applique alors cette séquence d'opérations sur chacune des deux données aléatoires Y et Z, successivement. Ainsi, à partir de ces deux données Y et Z appliquées successivement en entrée, on obtient successivement les données Y', $P_{IY'}$, $K_{IY'}$, respectivement Z', $P_{IZ'}$, $K_{IZ'}$, en sortie des opérations KEY PERM, SHIFT, COMP PERM.

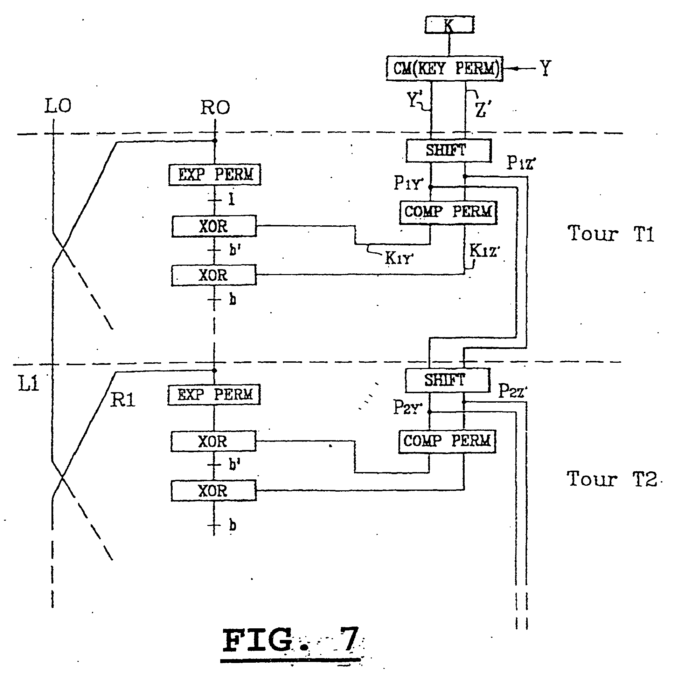

Un exemple pratique d'application au DES est représenté sur la figure 7.

Dans le DES, l'opération KEY PERM n'est exécutée qu'une seule fois, au début, tandis que la séquence d'opérations SHIFT et COMP PERM est exécutée dans chaque tour.

En outre, la sortie de l'opération SHIFT d'un tour Ti est appliquée comme entrée de l'opération SHIFT du tour suivant Ti+1(voir figures 1 et 2).

Pour appliquer le procédé de contre-mesure selon le deuxième mode d'application à cet algorithme DES, on applique alors la première opération KEY PERM sur les données aléatoires Y et Z, ce qui donne deux données aléatoires intermédiaires, notées Y' et Z'. Ces deux données aléatoires intermédiaires sont successivement appliquées à l'opérations SHIFT du premier tour T1, fournissant deux données aléatoires intermédiaires notées $P_{1Y'}$ et $P_{1Z'}$. Ces deux données aléatoires sont d'une part mémorisées en mémoire de travail pour l'opération SHIFT du tour suivant (le deuxième tour), et d'autre part appliquées successivement à l'opération EXP PERM du premier tour, pour fournir un premier résultat intermédiaire $K_{1Y'}$ et $K_{1Z'}$.

On procède ainsi dans chaque tour. Ainsi, à chaque tour Ti, on obtient un premier résultat aléatoire :

$$K_{iY'} = EXP\ PERM\ (SHIFT\ (Y'))\ ;$$

et un deuxième résultat aléatoire

$$K_{iZ'} = EXP\ PERM\ (SHIFT\ (Z'))\ ;$$

et les données aléatoires intermédiaires SHIFT (Y') $=P_{iY'}$ et SHIFT (Z')$=P_{iZ'}$ sont mémorisées en mémoire de travail pour le tour suivant Ti+1.

Pour chaque tour Ti, on pourrait alors recalculer la sous-clé correspondante Ki correspondant à la séquence d'opérations KEY PERM, SHIFT et COMP PERM de ce tour appliquée à la clé secrète K, en faisant un OU exclusif entre les deux résultats aléatoires $K_{iy'}$ et $K_{iz'}$ : Ki= $K_{iy'}$ XOR $K_{iz'}$.

Mais de préférence et comme représenté sur la *figure 7*, on ne recalcule pas la sous-clé $K_i$ du tour Ti. On applique le premier résultat aléatoire $K_{iy'}$ à la place de la sous-clé Ki dans une opération de OU exclusif XOR avec la donnée 1 fournie par l'opération d'expansion permutation EXP PERM. On obtient un résultat intermédiaire b'.

En effectuant ensuite un OU exclusif XOR de ce résultat intermédiaire b' avec le deuxième résultat aléatoire $K_{iz'}$, on retrouve la donnée de sortie b = XOR (1, Ki). On effectue donc les opérations suivantes dans chaque tour Ti, pour calculer le paramètre b à partir de l :

b'= 1 XOR $K_{iY'}$ et
b= b' XOR $K_{iZ'}$, comme repésenté pour les premier et deuxième tours sur la figure 7.

De cette manière, on n'utilise plus la sous-clé secrète elle-même dans le calcul du message chiffré, mais des "sous-clés aléatoires": la clé se trouve donc protégée avant et pendant l'exécution de l'algorithme cryptographique, car $K_{iY'}$ et $K_{iZ'}$ étant aléatoires et non connues du monde extérieur du composant (ou de la carte), elles sont susceptibles de changer à chaque nouvelle exécution de l'algorithme de cryptographie. On notera que dans l'application du procédé de contre-mesure selon l'invention au calcul et à l'utilisation des sous-clés, on tire une seule fois une valeur aléatoire, en début d'exécution de l'algorithme, avant les opérations sur la clé secrète.

Ce deuxième mode d'application du procédé de contre-mesure selon l'invention à la clé secrète peut être avantageusement combiné avec le premier mode d'application du procédé de contre-mesure au calcul du message chiffré proprement dit, cette combinaison rendant particulièrement efficace la contre-mesure.

La présente invention s'applique à l'algorithme de cryptographie à clé secrète DES, pour lequel des exemples de mise en, oeuvre ont été décrits. Il s'applique plus généralement à tout algorithme de cryptographie à clé secrète dont l'exécution par le microprocesseur de certaines opérations nécessitent une manipulation bit par bit de données.

Un composant électronique 1 mettant en oeuvre un procédé de contre-mesure selon l'invention dans un algorithme de cryptographie à clé secrète DES, comprend typiquement, comme représenté sur la figure 8, un microprocesseur oP, une mémoire programme 2 et une mémoire de travail 3. Des moyens 4 de génération d'une valeur aléatoire, sont prévus qui, si on se reporte aux organigrammes des figures 3 et 5, fourniront les valeurs aléatoires U et/ou Y de la taille voulue (32 bits pour U, 64 bits pour Y) à chaque exécution de l'algorithme de cryptographie. Un tel composant peut tout particulièrement être utilisé dans une carte à puce 5, pour améliorer son inviolabilité.

**Revendications**

1. Procédé de contre-mesure contre des attaques par analyse différentielle de consommation de courant dans un composant électronique mettant en oeuvre un algorithme cryptographique à clé secrète K sur un message d'entrée (M), **caractérisé en ce que** l'exécution d'une opération ($O_{PN}$) ou d'une séquence d'opérations comprenant une manipulation bit par bit d'une donnée d'entrée (D), pour fournir une donnée de sortie ($O_{PN}(D)$), comprend les étapes suivantes :

- tirage d'une valeur aléatoire, d'une première donnée aléatoire (U), de même taille que la donnée d'entrée (D) ;
- calcul d'une deuxième donnée aléatoire (V), en effectuant un OU exclusif entre la donnée d'entrée et la première donnée aléatoire (U);
- exécution de l'opération ($O_{PN}$) ou de la séquence d'opération successivement à la première donnée aléatoire (U) et à la deuxième donnée aléatoire (V), fournissant respectivement un premier résultat aléatoire ($O_{PN}(U)$) et un deuxième résultat aléatoire ($O_{PN}(V)$);
- calcul de la donnée de sortie ($O_{PN}(D)$) en effectuant un OU exclusif entre lesdits premier et deuxième résultats aléatoires.

2. Procédé de contre-mesure selon la revendication 1, **caractérisé en ce qu'**il est appliqué à des opérations (EXP PERM, P PERM) portant sur des données calculées à partir du message d'entrée (M).

3. Procède de contre-mesure selon l'une quelconque des revendications précédentes, **caractérisé en ce que** l'on tire une nouvelle valeur aléatoire (U) à chaque nouvelle exécution de la dite opération ou séquence d'opérations.

4. Procédé de contre-mesure selon la revendication 1, appliqué à une opération ou une séquence d'opérations (KEY PERM, SHIFT, COMP PERM) effectuées sur ladite clé secrète K.

5. Procédé de contre-mesure selon la revendication 4 **caractérisé en ce qu'**il est appliqué à ladite séquence d'opérations afin d'obtenir, à chaque tour (Ti) de l'algorithme, un premier résultat aléatoire ($K_{iy'}$) et un deuxième résultat aléatoire ($K_{iz'}$), à la place d'une sous-clé (Ki).

6. Procédé de contre-mesure selon la revendication 5, **caractérisé en ce que**, à chaque tour (Ti) une opération de OU exclusif entre la sous-clé (Ki) et une donnée d'entrée (1), ladite opération étant utilisée pour fournir une donnée de sortie (b), est remplacée par les opérations suivantes :

- calcul du OU exclusif entre ladite donnée d'entrée (1) et le premier résultat aléatoire ($K_{iy'}$) pour fournir un résultat intermédiaire (b') ;
- calcul du OU exclusif entre ledit résultat intermédiaire (b') et le deuxième résultat aléatoire ($K_{iz'}$) pour fournir ladite donnée de sortie (b).

7. Procédé de contre-mesure selon l'une quelconque des revendications 1, 2, 3, 5, et 6, **caractérisé en ce que** l'on tire une nouvelle valeur aléatoire (U ou Z) à chaque nouvelle exécution de l'algorithme de cryptographie.

8. Procédé de contre-mesure selon l'une quelconque des revendications précédentes, **caractérisé en ce qu'**il est appliqué à l'algorithme DES.

9. Composant électronique de sécurité (1) mettant en oeuvre un algorithme cryptographique à clé secrète K sur un message d'entrée (M) **caractérisé en ce qu'**il comporte

- des moyens (2) pour stocker ladite clé K ;
- des moyens (4) pour tirer une valeur aléatoire, d'une première donnée aléatoire (U) de même taille qu'une donnée d' entrée (D);
- des moyens ($\mu$p) pour calculer une deuxième donnée aléatoire (v), en effectuant un OU exclusif entre la donnée d'entrée et la première donnée aléatoire (U);
- des moyens (3) pour stocker lesdites données aléatoires ;
- des moyens ($\mu$p) pour exécuter une opération (OPN) ou une séquence d'opération successivement à la première donnée aléatoire (U) et à la deuxième donnée aléatoire (V), fournissant respectivement un premier résultat aléatoire ($O_{PN}(U)$) et un deuxième résultat aléatoire ($O_{PN}(V)$) ;
- des moyens ($\mu$p) pour calculer une donnée de sortie ($O_{PN}(D)$) en effectuant un ou exclusif entre lesdits premier et deuxième résultats aléatoires.

10. Carte à puce (CAP) comprenant un composant électronique de sécurité (1) selon la revendication 9.

**Patentansprüche**

1. Gegenmaßnahmenverfahren gegen Angriffe per Differentialanalyse durch den Stromverbrauch in einer elektronischen Komponente, wodurch ein kryptographischer Algorithmus mit geheimem Schlüssel K auf einer Eingangsmeldung (M) umgesetzt wird, **dadurch gekennzeichnet, dass** die Ausführung einer Operation (OPN) oder einer Sequenz von Operationen mit einer Manipulation Bit für Bit einer Eingangsangabe (D) zum Liefern einer Ausgangsangabe (OPN (D)) die folgenden Stufen umfasst:

- Ziehen eines zufälligen Wertes, einer ersten zufälligen Angabe (U) von derselben Größe wie die Eingangsangabe (D),
- Berechnung einer zweiten zufälligen Angabe (V) durch Durchführung eines exklusiven ODERs zwischen der Eingangsangabe und der ersten zufälligen Angabe (U);
- Ausführung der Operation (OPN) oder der Sequenz von Operationen im Anschluss an die erste zufällige Angabe (U) und die zweite zufällige Angabe (V), die jeweils ein erstes zufälliges Ergebnis (OPN (U)) und ein zweites zufälliges Ergebnis (OPN (V)) liefern;
- Berechnung der Ausgangsangabe (OPN (D)) durch Durchführung eines exklusiven ODERs zwischen den genannten ersten und zweiten zufälligen Ergebnissen.

2. Gegenmaßnahmenverfahren gemäß Anspruch 1, **dadurch gekennzeichnet, dass** es auf sich auf ab der Eingangsangabe (M) beziehende Daten berechnete Operationen (EXP PERM, P PERM) angewendet wird.

3. Gegenmaßnahmenverfahren gemäß einem der vorherigen Ansprüche, **dadurch gekennzeichnet, dass** man einen neuen zufälligen Wert (U) bei jeder neuen Ausführung der genannten Operation oder Sequenz von Operationen zieht.

4. Auf eine Operation oder eine auf den genannten geheimen Schlüssel K angewendete Sequenz von Operationen (KEY PERM, SHIFT, COMP PERM) angewendetes Gegenmaßnahmenverfahren gemäß Anspruch 1.

5. Gegenmaßnahmenverfahren gemäß Anspruch 4, **dadurch gekennzeichnet, dass** es auf die genannte Sequenz von Operationen angewendet wird, um bei jedem Satz (Ti) des Algorithmus ein erstes zufälliges Ergebnis ($K_{iy}$') und ein zweites zufälliges Ergebnis ($K_{iz}$') anstelle eines Unterschlüssels (Ki) zu erhalten.

6. Gegenmaßnahmenverfahren gemäß Anspruch 5, **dadurch gekennzeichnet, dass** bei jedem Satz (Ti) eine Operation des exklusiven ODERs zwischen dem Unterschlüssel ($K_i$) und einer Eingangsangabe (1) durch die folgenden Operationen ersetzt wird, wobei die genannte Operation eingesetzt wird, um eine Ausgangsangabe (b) zu liefern:

- Berechnung des exklusiven ODERs zwischen der genannten Eingangsangabe (1) und dem ersten zufälligen Ergebnis ($K_{iy}$'), um ein Zwischenergebnis (b') zu liefern:
- Berechnung des exklusiven ODERs zwischen dem genannten Zwischenergebnis (b') und dem zweiten zufälligen Ergebnis ($K_{iz}$'), um die genannte Ausgangsangabe (b) zu liefern.

7. Gegenmaßnahmenverfahren gemäß Anspruch 1, 2,3, 5, und 6, **dadurch gekennzeichnet, dass** man bei jeder neuen Ausführung des kryptographischen Algorithmus einen neuen zufälligen Wert (U oder Z) zieht.

8. Gegenmaßnahmenverfahren gemäß einem der vorherigen Ansprüche, **dadurch gekennzeichnet, dass** es auf den Algorithmus DES angewendet wird.

9. Einen kryptogrpahischen Algorithmus mit geheimem Schlüssel K auf einer Eingangsmeldung (M) umsetzende elektronische Sicherheitskomponente (1), **dadurch gekennzeichnet, dass** sie Folgendes umfasst:

- Mittel (2) zum Speichern des genannten Schlüssels K;
- Mittel (4) zum Ziehen eines zufälligen Wertes, einer ersten zufälligen Angabe (U) von derselben Größe wie eine Eingangsangabe (D),
- Mittel ($\mu$p) zum Berechnen einer zweiten zufälligen Angabe (V) durch Durchführung eines exklusiven ODERs zwischen der Eingangsangabe und der ersten zufälligen Angabe (U);
- Mittel (3) zum Speichern der genannten zufälligen Angaben;
- Mittel ($\mu$p) zur Durchführung einer Operation (OPN) oder einer Sequenz von Operationen im Anschluss an die erste zufällige Angabe (U) und die zweite zufällige Angabe (V); die jeweils ein erstes zufälliges Ergebnis OPN (U)) und ein zweites zufälliges Ergebnis (OPN (V)) liefern;
- Mittel ($\mu$p) zur Berechnung einer Ausgangsangabe (OPN (D)) durch Durchführung eines exklusiven ODERs zwischen den genannten ersten und zweiten zufälligen Mitteln.

**10.** Chipkarte (CAP) mit einer elektronischen Sicherheitskomponente (1) gewmäß Anspruch 9.

**Claims**

**1.** A countermeasure method against attacks by differential current consumption analysis in an electronic component implementing a secret key K cryptographic algorithm on an input message (M), **characterised in that** the execution of an operation ($O_{PN}$) or a sequence of operations comprising a bitwise manipulation of an input data item (D), in order to provide an output data item ($O_{PN}(D)$), comprises the following steps:

- drawing a random value of a first random data item (U), of the same size as the input data item (D);
- computing a second random data item (V) by performing an Exclusive OR between the input data item and the first random data item (U);
- executing the operation ($O_{PN}$) or the sequence of operations successively on the first random data item (U) and the second random data item (V), providing respectively a first random result ($O_{PN}(U)$) and a second random result ($O_{PN}(V)$);
- computing the output data item ($O_{PN}(D)$) by performing an Exclusive OR between said first and second random results.

**2.** A countermeasure method according to Claim 1, **characterised in that** it is applied to operations (EXP PERM, P PERM) concerning data items computed from the input message (M).

**3.** A countermeasure method according to any one of the preceding claims, **characterised in that** a new random value (U) is drawn at each new execution of said operation or sequence of operations.

**4.** A countermeasure method according to Claim 1, applied to an operation or a sequence of operations (KEY PERM, SHIFT, COMP PERM) performed on said secret key K.

**5.** A countermeasure method according to Claim 4, **characterised in that** it is applied to said sequence of operations in order to obtain, at each loop (Ti) of the algorithm, a first random result ($K_{iy'}$) and a second random result ($K_{iz'}$), instead of a sub-key (Ki).

**6.** A countermeasure method according to Claim 5, **characterised in that**, at each loop (Ti), an Exclusive OR operation between the sub-key ($K_i$) and an input data item (1), said operation being used to provide an output data item (b), is replaced by the following operations:

- computing the Exclusive OR between said input data item (1) and the first random result ($K_{iy'}$) in order to provide an intermediate result (b');
- computing the Exclusive OR between said intermediate result (b') and the second random result ($K_{iz'}$) in order to provide said output data item (b).

**7.** A countermeasure method according to any one of Claims 1, 2, 3, 5 and 6, **characterised in that** a new random value (U or Z) is drawn at each new execution of the cryptography algorithm.

**8.** A countermeasure method according to any one of the preceding claims, **characterised in that** it is applied to the DES algorithm.

**9.** An electronic security component (1) implementing a secret key K cryptographic algorithm on an input message (M), **characterised in that** it comprises

- means (2) for storing said key K;
- means (4) for drawing a random value of a first random data item (U), of the same size as an input data item (D);
- means ($\mu$P) for computing a second random data item (V), by performing an Exclusive OR between the input data item and the first random data item (U);
- means (3) for storing said random data items;
- means ($\mu$P) for executing an operation ($O_{PN}$) or a sequence of operations successively on the first random data item (U) and on the second random data item (V), providing respectively a first random result (($O_{PN}(U)$) and a second random result ($O_{PN}(V)$);

- means ($\mu$P) for computing an output data item ($O_{PN}(D)$) by performing an Exclusive OR between said first and second random results.

**10.** A smart card (SC) comprising an electronic security component (1) according to Claim 9.

FIG.1

FIG.2

FIG.3

FIG. 8

Li                    Ri

h

CM(EXP PERM)' ←—U=U1

l

XOR ←—Ki

b

SBOX                          Tour Ti

a

CM(P PERM) ←—U=U2

c

XOR

Li+1                  Ri+1

# FIG.4

L16

R16

e'

IP-$^1$

f' = c

# FIG. 5

**FIG. 6**

FIG. 7